# EUROPEAN PATENT APPLICATION

(11) **EP 3 076 725 A1**
(43) Date of publication of application: **05.10.2016**
(21) Application number: 14864847.0
(22) Date of filing: 14.11.2014
(51) Int. Cl.: H04W 52/14, H04W 74/08, H04W 84/12

(54) **METHOD AND DEVICE FOR TRANSMITTING UPLINK FRAME IN WIRELESS LAN**

(30) Priority: 25.11.2013 US 201361908179 P
(71) Applicant: LG Electronics Inc., Yeongdeungpo-gu Seoul 07336 (KR)
(72) Inventor: CHOI, Jinsoo, Seoul 137-893 (KR); CHUN, Jinyoung, Seoul 137-893 (KR); LEE, Wookbong, Seoul 137-893 (KR); LIM, Dongguk, Seoul 137-893 (KR); CHO, Hangyu, Seoul 137-893 (KR)
(74) Representative: Cabinet Plasseraud
(86) International application number: PCT/KR2014/010966
(87) International publication number: WO 2015/076532

(57) **Abstract**

A method and a device for transmitting an uplink frame in a wireless LAN are disclosed. The method for transmitting an uplink frame in a wireless LAN can comprise the steps of: receiving, by at least one STA included in a UL-OFDMA transmission STA group, transmission power determination information from an AP; determining, by the at least one STA, uplink transmission power on the basis of the transmission power determination information; and transmitting, by the at least one STA, an uplink frame by the uplink transmission power in an overlapped time resource through each channel allocated on the basis of OFDMA.

## Description

### BACKGROUND OF THE INVENTION

### Field of the invention

The present invention relates to wireless communication, and more particularly, to a method and a device for transmitting an uplink frame in a wireless local area network (WLAN).

### Related Art

As a method for a plurality of stations (STAs) to share a radio medium in a wireless LAN system, a distributed coordination function (DCF) may be used. The DCF is based on carrier sensing multiple access with collision avoidance (CSMA)/CA.

In general, if the STA does not use the medium during a DCF inter frame space (DIFS) period or more (that is, if the STA is idle) while operating under a DCF access environment, the STA may transmit a medium access control (MAC) protocol data unit (MPDU) of which transmission is imminent. When it is determined that the medium is in use by a carrier sensing mechanism, the STA can determine a size of a contention window (CW) and perform a backoff procedure by a random backoff procedure. The STA can select a random value in the CW in order to perform the backoff procedure and determine a backoff time based on the selected random value. When the plurality of STAs intends to access the medium the STA having the shortest backoff time among the plurality of STAs can access the medium and the residual STAs can stop a residual backoff time and stand by until transmission of the STA accessing the medium is completed. After frame transmission of the STA accessing the medium is completed, the residual STAs can acquire a transmission resource by performing contention with the residual backoff time again. By such a method, in the existing wireless LAN system, one STA performs communication with an access point (AP) by occupying all transmission resources.

### SUMMARY OF THE INVENTION

The present invention provides a method for transmitting an uplink frame in a wireless LAN.

The present invention also provides a device for transmitting an uplink frame in a wireless LAN.

In an aspect, a method for transmitting an uplink frame in wireless LAN may include: receiving, by at least one station (STA) included in an uplink (UL)-orthogonal frequency division multiplexing (OFDMA) transmission STA group, transmission power determination information from an access point (AP); determining, by the at least one STA, uplink transmission power on the basis of the transmission power determination information; and transmitting, by the at least one STA, an uplink frame by the uplink transmission power in an overlapped time resource through each channel allocated on the basis of OFDMA, wherein the UL-OFDMA transmission group is a group including the at least one STA that transmits the uplink frame to the AP through different frequency resources on the overlapped time resource on the basis of the OFDMA.

In another aspect, at least one station (STA) included in an uplink (UL)-orthogonal frequency division multiplexing (OFDMA) transmission STA group transmitting an uplink frame in wireless LAN may include: a radio frequency (RF) unit implemented to transmit or receive a radio signal; and a process operatively connected with the RF unit, wherein the processor is implemented to receive transmission power determination information from an access point (AP), determine uplink transmission power based on the transmission power determination information, and transmit an uplink frame by the uplink transmission power in an overlapped time resource through each channel allocated on the basis of OFDMA, and the UL-OFDMA transmission group is a group including the at least one STA that transmits the uplink frame to the AP through different frequency resources on the overlapped time resource on the basis of the OFDMA.

It is possible to solve a power unbalance problem which occurs during uplink (UL)-orthogonal frequency division multiplexing (OFDMA) transmission by a plurality of STAs. Uplink transmission power is balanced in the UL-OFDMA transmission to reduce an influence on a network allocation vector (NVA) configuration and channel access deferral of an adjacent STA. Further, the uplink transmission power is balanced in the UL-OFDMA transmission to reduce even performance deterioration of an automatic gain control (AGC) and a burden of AGC implementation at a receiver that receives an uplink frame transmitted based on the UL-OFDMA transmission.

### BRIEF DESCRIPTION OF THE DRAWINGS

FIG. 1 is a conceptual view the structure of a wireless local area network (WLAN).
FIG. 2 is a conceptual view illustrating a method for controlling transmission power by an STA during UL-OFDMA transmission according to an embodiment of the present invention.
FIG. 3 is a conceptual view illustrating a method for determining uplink transmission power according to an embodiment of the present invention.
FIG. 4 is a conceptual view illustrating a method for transmitting transmission power determination information according to an embodiment of the present invention.
FIG. 5 is a conceptual view illustrating a method for transmitting transmission power determination information according to an embodiment of the present invention.
FIG. 6 is a conceptual view illustrating a method for transmitting transmission power determination information according to an embodiment of the present invention.
FIG. 7 is a conceptual view illustrating a method for transmitting an acknowledge (ACK) frame according to an embodiment of the present invention.
FIG. 8 is a conceptual view illustrating a method for transmitting an uplink frame by an STA having a low uplink transmission power capability according to an embodiment of the present invention.
FIG. 9 is a conceptual view illustrating a PPDU format for transmitting a downlink frame through a downlink dedicated channel according to an embodiment of the present invention.
FIG. 10 is a block diagram illustrating a wireless apparatus in which an embodiment of the present invention can be applied.

### DESCRIPTION OF EXEMPLARY EMBODIMENTS

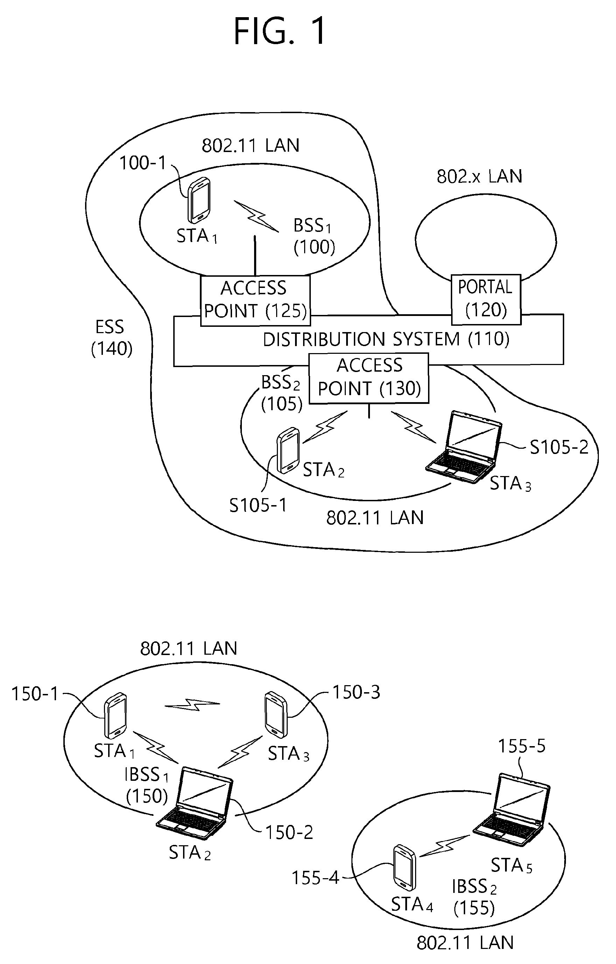

FIG. 1 is a concept view illustrating the structure of a wireless local area network (WLAN).

An upper part of Fig. 1 shows the structure of the IEEE (institute of electrical and electronic engineers) 802.11 infrastructure network.

Referring to the upper part of Fig. 1, the WLAN system may include one or more basic service sets (BSSs, 100 and 105). The BSS 100 or 105 is a set of an AP such as AP (access point) 125 and an STA such as STA1 (station) 100-1 that may successfully sync with each other to communicate with each other and is not the concept to indicate a particular area. The BSS 105 may include one AP 130 and one or more STAs 105-1 and 105-2 connectable to the AP 130.

The infrastructure BSS may include at least one STA, APs 125 and 130 providing a distribution service, and a distribution system (DS) 110 connecting multiple APs.

The distribution system 110 may implement an extended service set (ESS) 140 by connecting a number of BSSs 100 and 105. The ESS 140 may be used as a term to denote one network configured of one or more APs 125 and 130 connected via the distribution system 110. The APs included in one ESS 140 may have the same SSID (service set identification).

The portal 120 may function as a bridge that performs connection of the WLAN network (IEEE 802.11) with other network (for example, 802.X).

In the infrastructure network as shown in the upper part of Fig. 1, a network between the APs 125 and 130 and a network between the APs 125 and 130 and the STAs 100-1, 105-1, and 105-2 may be implemented. However, without the APs 125 and 130, a network may be established between the STAs to perform communication. The network that is established between the STAs without the APs 125 and 130 to perform communication is defined as an ad-hoc network or an independent BSS (basic service set).

A lower part of Fig. 1 is a concept view illustrating an independent BSS.

Referring to the lower part of FIG. 1, the independent BSS (IBSS) is a BSS operating in ad-hoc mode. The IBSS does not include an AP, so that it lacks a centralized management entity. In other words, in the IBSS, the STAs 150-1, 150-2, 150-3, 155-4 and 155-5 are managed in a distributed manner. In the IBSS, all of the STAs 150-1, 150-2, 150-3, 155-4 and 155-5 may be mobile STAs, and access to the distribution system is not allowed so that the IBSS forms a self-contained network.

The STA is some functional medium that includes a medium access control (MAC) following the IEEE (Institute of Electrical and Electronics Engineers) 802.11 standards and that includes a physical layer interface for radio media, and the term "STA" may, in its definition, include both an AP and a non-AP STA (station).

The STA may be referred to by various terms such as mobile terminal, wireless device, wireless transmit/receive unit (WTRU), user equipment (UE), mobile station (MS), mobile subscriber unit, or simply referred to as a user.

Hereinafter, in the embodiment of the present invention, data (alternatively, a frame) transmitted from the AP to the STA may be expressed as a term called downlink data (alternatively, a downlink frame) and data transmitted from the STA to the AP may be expressed as a term called uplink data (alternatively, an uplink frame). Further, transmission from the AP to the STA may be expressed as a term called downlink transmission and transmission from the STA to the AP may be expressed as a term called uplink transmission.

As a requirement for a high throughput and performance improvement of a quantity of experience (QoE) after IEEE802.11ac, a research into a new wireless LAN standard is in progress.

New functionalities for a next-generation wireless LAN system may be defined and the new functionalities may be applied to a wireless LAN network. A legacy terminal that supports the existing wireless LAN system may not support the new functionalities. Accordingly, the next-generation wireless LAN system needs to be designed to so as not to influence performances of legacy terminals.

The existing wireless LAN system supports multi-channels. When the multi-channels are supported, one STA may perform communication based on a wider bandwidth than a base bandwidth of 20 MHz.

In the existing wireless LAN system, there is a limit in operation of the wider bandwidth by a primary channel rule. For example, a case in which a secondary channel which is a channel adjacent to a primary channel is used by an overlapped BSS (OBSS) may be assumed. When it is determined that the secondary channel is busy, the STA may not use the secondary channel as a bandwidth. Accordingly, the STA may not perform communication based on the multi-channels. That is, under an environment in which the OBSS is not less, the high throughput based on the multi-channels may not be acquired due to the limit in operation of the wider bandwidth.

According to the embodiment of the present invention, the STA may perform the uplink transmission based on orthogonal frequency division multiple access (OFDMA) in order to solve a problem of the existing wireless LAN. The uplink transmission based on the OFDMA may be expressed as a term called uplink (UL)-OFDMA. The downlink transmission based on the OFDMA may be expressed as a term called downlink (DL)-OFDMA.

When the UL-OFDMA transmission is used, the number of subbands (alternatively, sub channels) may be variable, which are used for transmission of the data (alternatively, frame) within an inverse fast fourier transform (IFFT) size. In detail, the STA may transmit the uplink frame to the AP through the variable numbers of subbands according to a channel situation. That is, when the UL-OFDMA transmission is used, the plurality of respective

STAs may transmit the frame through different sub channels on overlapped time resources.

Availabilities of the sub channels may be determined based on clear channel assessment (CCA) by the STA. Transmission of the uplink frame by the STA through the variable number of sub channels may cause a power imbalance problem at a receiver (e.g., AP).

The power imbalance problem at the receiver may give a burden in performance and implementation of an automatic gain control (AGC) in the AP. In detail, when an analog signal is transformed to a digital signal through the AGC, a quantization error may increase due to a power imbalance. The quantization error may cause performance deterioration of the AGC. Further, when the power imbalance occurs, it may be difficult to implement the AGC due to an increase of a power level range.

Further, the power imbalance may influence a network allocation vector (NVA) configuration and channel access deferral of an adjacent STA.

When the STA unconditionally allocates and transmits the data to the channel regardless of whether the channel is busy/idle, unnecessary power consumption and interference may be cause undesirably.

According to the embodiment of the present invention, when the AP transmits the respective downlink frames to the plurality of STAs, respectively on the overlapped time resources based on the DL-OFDMA, the AP may find whether to transmit a packet to the STA for each sub channel. That is, the AP may find the channel used for transmitting the packet to the STA and control transmission power based information on the channel used for transmitting the packet to the STA.

When the plurality of STAs transmit the frame to the AP through the channels allocated based on the UL-OFDMA, respectively, the plurality of respective STAs may find whether the frame is transmitted through the sub channels of other STAs. Therefore, when the UL-OFDMA transmission is performed by the plurality of STAs, it may be difficult for the plurality of respective STAs to control the transmission power for the uplink frame. Accordingly, when the UL-OFDMA transmission is performed in the wireless LAN system, a method for controlling the transmission power for the uplink frame by the STA is required.

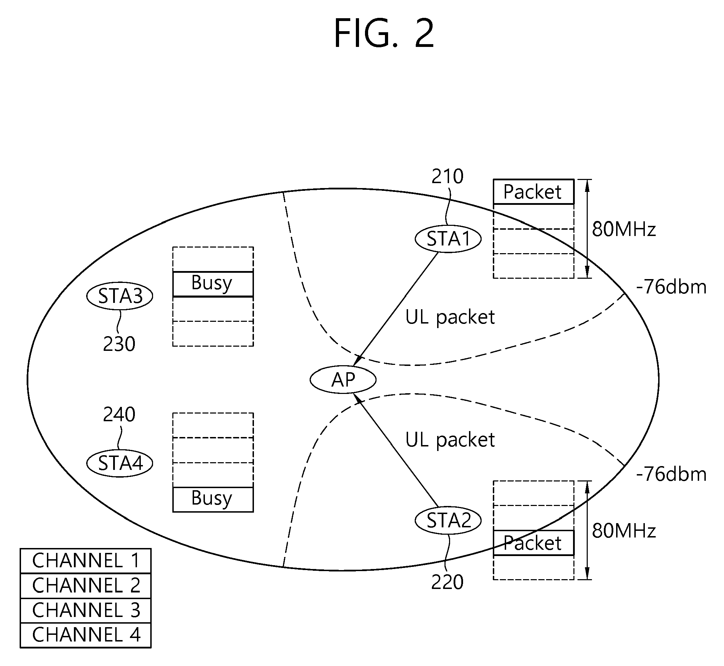

FIG. 2 is a conceptual view illustrating a method for controlling transmission power by an STA during UL-OFDMA transmission according to an embodiment of the present invention.

In FIG. 2, a case in which at least one STA among an STA1 210 to an STA4 240 performs the UL-OFDMA transmission through 20 MHz is disclosed as an example. A case is assumed, in which the STA1 210 is allocated with channel 1, the STA2 220 is allocated with channel 3, the STA3 230 is allocated with channel 2, and the STA4 240 is allocated with channel 4 as the channel for the UL-OFDMA transmission. The respective channels may be construed to correspond to the sub channels at the time of performing the UL-OFDMA transmission.

Respective channel bandwidths may be 20 MHz. Each of the STA1 210 to the STA4 240 that are allocated with the channels for the UL-OFDMA transmission monitors the respective channels allocated on the overlapped time resources based on the CCA and determines whether the respective allocated channels are idle to transmit the uplink frame.

For example, referring to FIG. 2, when the channel 1 and the channel 3 are idle, the STA1 210 may transmit the uplink frame (alternatively, packet) through the channel 1 and the STA2 220 may transmit the uplink frame through the channel 3. On the contrary, when the channel 2 and the channel 4 are busy, the STA3 230 may not transmit the uplink frame through the channel 2 and the STA4 240 may not transmit the uplink frame through the channel 4.

When the UL-OFDMA transmission is performed, the uplink frame transmitted by the STA3 230 and the uplink frame transmitted by the STA4 240 on the overlapped time resources may form one OFDMA packet. One OFDMA packet may be data transmitted through different frequency bands on the overlapped time resources.

Hereinafter, in the embodiment of the present invention, at least one STA (that is, at least one STA that performs the UL-OFDMA transmission on the overlapped time resources) that configures and transmits the OFDMA packet may be expressed as an UL-OFDMA transmission STA. In the case of FIG. 1, the STA1 210 and the STA2 220 may be UL-OFDMA transmission STAs. All UL-OFDMA transmission STAs that transmit one OFDMA packet through different frequency resources on the overlapped time resources may be expressed as a term called an UL-OFDMA transmission STA group. In the case of FIG. 2, the UL-OFDMA transmission STA group may include the STA1 210 and the STA2.

As another expression, the UL-OFDMA transmission STA group may be a group including at least one STA that transmits the uplink frame to the AP through the different frequency resources on the overlapped time resources based on the OFDMA.

When the respective UL-OFDMA transmission STAs included in the UL-OFDMA transmission STA group transmit the uplink frame by using full power, fluctuation of transmission power sensed on a medium may be large according to the number of UL-OFDMA transmission STAs. When the fluctuation of the transmission power sensed on the medium is large, a channel access operation based on the CCA of adjacent STAs may be influenced by the large fluctuation. In detail, the adjacent STA may determine whether the channel is idle/busy based on the channel clear assessment (CCA). When the transmission power at a size of a specific bandwidth is equal to or more than a predetermined threshold, it may be reported that the channel is busy based on the CCA. For example, when transmission power sensed at a transmission bandwidth of 80 MHz is equal to or more than - 76 dbm, it may be reported that a channel corresponding to the transmission bandwidth of 80 MHz is busy based on the CCA. Accordingly, when the fluctuation of the transmission power sensed on the medium is large, the fluctuation of the transmission power sensed by the adjacent STA may be large. Therefore, the adjacent STAs may not accurately determine whether the channel is busy/idle.

In addition, an imbalance problem of reception power of the AP that receives the uplink frame transmitted based on the UL-OFDMA transmission according to the number of UL-OFDMA transmission STAs included in the UL-OFDMA transmission STA group may also occur.

According to the embodiment of the present invention, the UL-OFDMA transmission STA may control the transmission power of the uplink frame. For example, the UL-OFDMA transmission STA may receive information for controlling the transmission power for the uplink frame from the AP and control the transmission power for the uplink frame at the time of performing the UL-OFDMA transmission. A method for controlling the transmission power for the UL-OFDMA transmission by the UL-OFDMA transmission STA will be described below in detail.

For example, the UL-OFDMA transmission STA may receive from the AP information on the number of UL-OFDMA transmission STAs included in the UL-OFDMA transmission STA group and/or information on the channel used by the UL-OFDMA transmission STA included in the UL-OFDMA transmission STA group. Hereinafter, in the embodiment of the present invention, a term called the information on the number of UL-OFDMA transmission STAs represents information on the number of UL-OFDMA transmission STAs included in the UL-OFDMA transmission STA group. Further, a term called the information on the channel used by the UL-OFDMA transmission STA group may represent information on the channel used by the UL-OFDMA transmission STA included in the UL-OFDMA transmission STA group.

Information for determining the transmission power for the uplink frame by the UL-OFDMA transmission STA like the information on the number of UL-OFDMA transmission STAs or the information on the channel used by the UL-OFDMA transmission STA group may be expressed as a term called transmission power determination information. The transmission power for the uplink frame by the UL-OFDMA transmission STA may be expressed as a term called uplink transmission power.

When the UL-OFDMA transmission STA may find the transmission power determination information, the UL-OFDMA transmission STA may determine the uplink transmission power and transmit the uplink frame based on the determined uplink transmission power.

The uplink transmission power may be determined by considering an NAV configuration for the channel access deferral of the adjacent STA and/or the balance of the reception power of the AP that receives the uplink frame. For example, the uplink transmission power may be determined as minimum power for the NAV configuration for the channel access deferral of the adjacent STA.

For example, when the number of UL-OFDMA transmission STAs is two, the respective UL-OFDMA transmission STAs may determine as the uplink transmissions power a 1/2 size (e.g., -79 dbm) of the minimum power for the NAV configuration for the channel access deferral of the adjacent STA may be determined as the uplink transmission power by considering the minimum power (e.g., -76 dbm) for the NAV configuration for the channel access deferral of the adjacent STA. That is, two UL-OFDMA transmission STAs transmit the uplink subframe with the uplink transmission power of the -79 dbm size, and as a result, the transmission power corresponding to -76 dbm may be sensed on the medium by the adjacent STA.

Hereinafter, in the embodiment of the present invention, it is assumed that there is no power consumption depending on a distance as an example for the uplink transmission power by the UL-OFDMA transmission STA for easy description. The uplink transmission power of the UL-OFDMA transmission STA may be determined by additionally considering the power consumption depending on a transmission/reception distance between the STA and the AP.

Hereinafter, in the embodiment of the present invention, a method for determining the uplink transmission power by the UL-OFDMA transmission STA will be disclosed in detail.

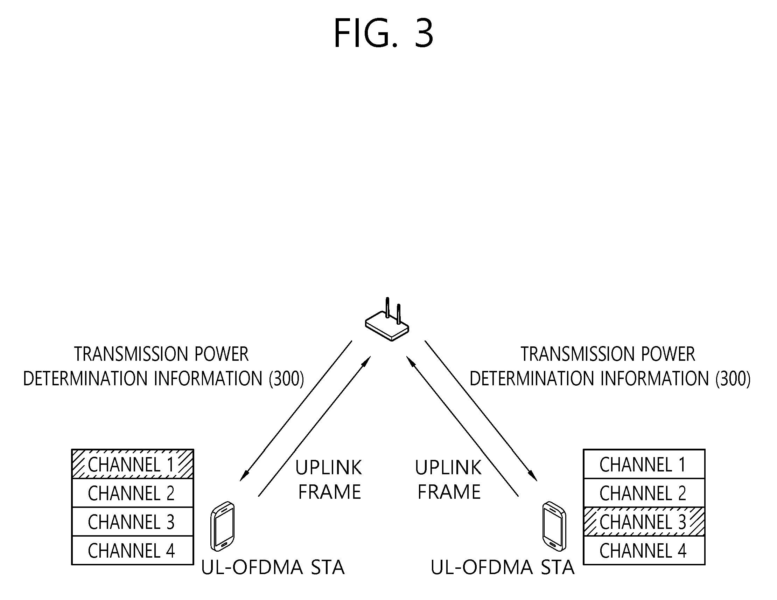

FIG. 3 is a conceptual view illustrating a method for determining uplink transmission power according to an embodiment of the present invention.

Referring to FIG. 3, the AP may transmit transmission power determination information 300 to the UL-OFDMA STA and the UL-OFDMA STA may determine the uplink transmission power based on the transmission power determination information 300.

The transmission power determination information 300 transmitted by the AP may include the information on the channel used by the UL-OFDMA transmission STA group.

For example, the information on the channel used by the UL-OFDMA transmission STA group may be transmitted by various methods. For example, the information on the channel used by the UL-OFDMA transmission STA group may be bitmap information indicating the channel used by the UL-OFDMA transmission STA included in the UL-OFDMA transmission STA group among all channels (hereinafter, all UL-OFDMA transmission channels) for the UL-OFDMA transmission. As illustrated in FIG. 1, the information on the channel used by the UL-OFDMA transmission STA group may be bitmap information indicating channels (the channels 1 and 3) to be used by the UL-OFDMA transmission STA group among all UL-OFDMA transmission channels (the channel 1 to the channel 4).

As another example, the information on the channel used by the UL-OFDMA transmission STA group may be index information indicating the channel to be used by the UL-OFDMA transmission STA group among all channels (hereinafter, all UL-OFDAM transmission channels) for the UL-OFDMA transmission. As illustrated in FIG. 1, the information on the channel used by the UL-OFDMA transmission STA group may be bitmap information indicating channels (the channels 1 and 3) to be used by the UL-OFDMA transmission STA group among all UL-OFDMA transmission channels (the channel 1 to the channel 4).

As yet another example, the information on the channel used by the UL-OFDMA transmission STA group may be information indicating the number of channels to be used by the UL-OFDMA transmission STA. As illustrated in FIG. 1, the information on the channel used by the UL-OFDMA transmission STA group may indicate the number (e.g., two) of channels (the channel 1 and the channel 3) to be used by the UL-OFDMA transmission STA group.

The UL-OFDMA STA may receive from the AP the information on the channel used by the UL-OFDAM transmission STA group, which is the transmission power determination information 300 and determine the uplink transmission power. For example, when the number of channels used by the UL-OFDMA transmission STA group is two, the respective UL-OFDMA transmission STAs included in the UL-OFDMA transmission STA group may determine the uplink transmission power as 1/2 of default power (alternatively, full power) and transmit the uplink frame with the determined uplink transmission power. As yet another example, when the number of channels used by the UL-OFDMA transmission STA group is three, the respective UL-OFDMA transmission STAs included in the UL-OFDMA transmission STA group may determine the uplink transmission power as 1/3 of the default power (alternatively, full power) and transmit the uplink frame with the determined uplink transmission power.

As yet another example, the AP may transmit a direct value of the uplink transmission power to the UL-OFDMA STA as the transmission power determination information 300. That is, the transmission power determination information 300 may include information on a detailed uplink transmission power value determined based on the number of channels to be used by the UL-OFDMA STA group. The information on the uplink transmission power value may be a quantization value in order to reduce signaling overhead. The information on the uplink transmission power value may be a value acquired by performing quantization depending on a quantization level with respect consecutive uplink transmission power values. Alternatively, the information on the uplink transmission power value may be a value indicating one uplink transmission power on a set including a plurality of determined uplink transmission powers.

The AP may transmit the transmission power determination information 300 to the UL-OFDMA STA by using various methods.

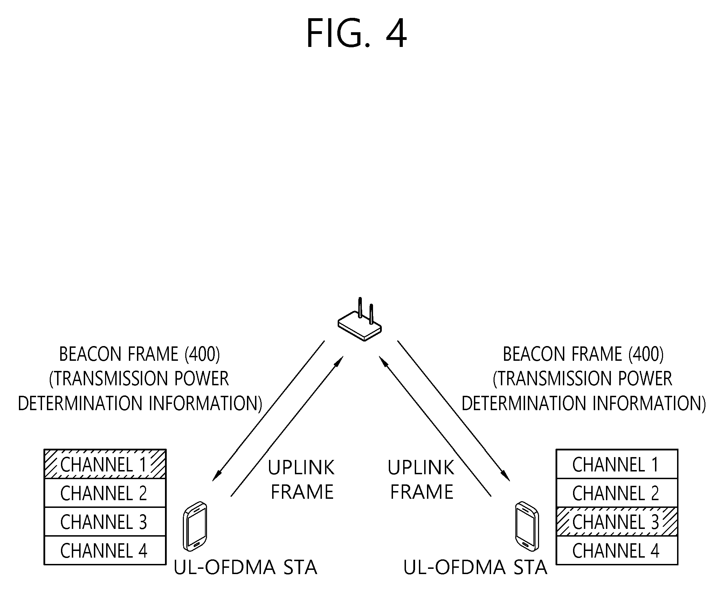

FIG. 4 is a conceptual view illustrating a method for transmitting transmission power determination information according to an embodiment of the present invention.

In FIG. 4, the transmission power determination information transmitted by the AP through a beacon frame 400 is disclosed.

Referring to FIG. 4, for example, the AP may transmit the beacon frame 400 used for a passive scanning procedure, which includes the transmission power determination information. The AP may broadcast the beacon frame 400 according to a set period and the STA that receives the beacon frame 400 may access the AP based on the information included in the beacon frame 400.

For example, a frame body of the beacon frame 400 may include the transmission power determination information. For example, the transmission power determination information may include at least one of the information on the number of UL-OFDMA transmission STAs, the information on the channel used by the UL-OFDMA transmission STA group, and the information on the uplink transmissions power value of the UL-OFDMA transmission STA.

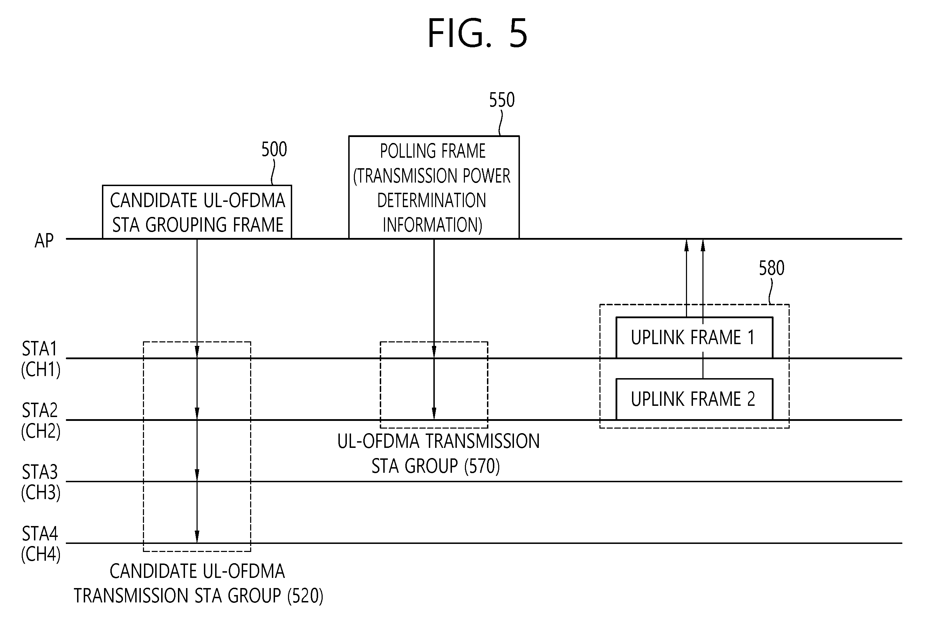

FIG. 5 is a conceptual view illustrating a method for transmitting transmission power determination information according to an embodiment of the present invention.

In FIG. 5, disclosed is a method for transmitting the transmission power determination information to the UL-OFDMA transmission STA by considering information included in a candidate UL-OFDMA transmission STA grouping frame 500.

The candidate UL-OFDMA transmission STA grouping frame 500 may be a frame for configuring a candidate UL-OFDMA transmission STA group 520 that groups candidate UL-OFDMA transmission STAs. The candidate UL-OFDMA transmission STA group 520 may include a plurality of candidate UL-OFDMA transmission STAs (a plurality of STAs to constitute one OFDMA packet as yet another expression) that may perform the UL-OFDMA transmission on an overlapped time. At least one STA among the candidate UL-OFDMA transmission STAs may be the UL-OFDMA transmission STA that actually performs the UL-OFDMA transmission and a UL-OFDMA transmission group 570 may be included in the candidate UL-OFDMA transmission STA group 520.

The AP may transmit the candidate UL-OFDMA transmission STA grouping frame 500 in order to group the candidate UL-OFDMA transmission STA on the overlapped time for the UL-OFDMA transmission.

The AP may transmit the transmission power determination information to the UL-OFDMA transmission STA through a polling frame (alternatively, a trigger frame) 550 by considering information included in a candidate UL-OFDMA transmission STA grouping frame 500.

The candidate UL-OFDMA transmission grouping frame 500 transmitted by the AP may include the information on the candidate UL-OFDMA transmission STA group 520. The information on the candidate UL-OFDMA transmission STA group 520 may include index information for indicating the respective candidate UL-OFDMA transmission STAs included in the candidate UL-OFDMA transmission STA group 520 and/or order information for the respective candidate UL-OFDMA transmission STAs.

The AP may transmit the polling frame (alternatively, trigger frame) 550 for polling or triggering the UL-OFDMA transmission before the UL-OFDMA transmission STA transmits the uplink frame in order to receive the uplink frame only from the UL-OFDMA transmission STA among the candidate UL-OFDMA transmission STAs. The polling or triggering of the UL-OFDMA transmission before the UL-OFDMA transmission STA transmits the uplink frame may be performed based on the index information for indicating the respective candidate UL-OFDMA transmission STAs included in the candidate UL-OFDMA transmission STA grouping frame 500 and/or the order information for the respective candidate UL-OFDMA transmission STAs.

Further, the polling frame 550 for the UL-OFDMA transmission may be included in the transmission power determination information for determining the uplink transmission powers of the respective UL-OFDMA transmission STAs.

For example, the transmission power determination information for the UL-OFDMA transmission may include at least one of the information on the number of UL-OFDMA transmission STAs, the information on the channel used by the UL-OFDMA transmission STA group, and the information on the uplink transmissions power value of the UL-OFDMA transmission STA.

The respective UL-OFDMA transmission STAs that receive the polling frame 550 for the UL-OFDMA transmission may determine the uplink transmission power based on the polling frame 550 for the received polling frame 550 for the UL-OFDMA transmission and transmit an uplink frame 580 based on the determined uplink transmission power.

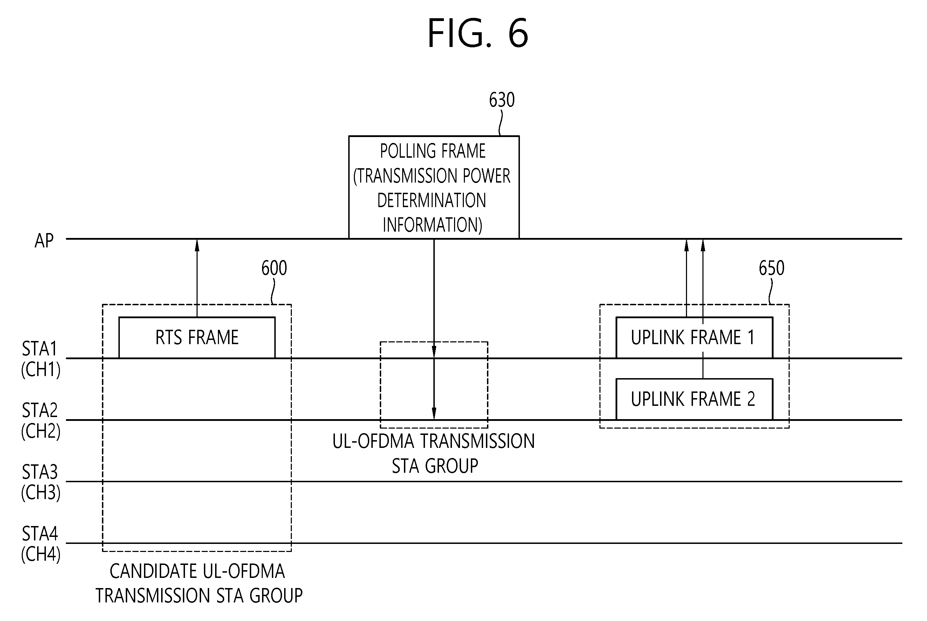

FIG. 6 is a conceptual view illustrating a method for transmitting transmission power determination information according to an embodiment of the present invention.

In FIG. 6, disclosed is a method for transmitting transmission power determination information based on a CTS frame 630 on transmitting and receiving procedures of an RTS frame 600/the CTS frame 630.

The STA that intends to perform the UL-OFDMA transmission may transmit the RTS frame to the AP. The RTS frame 600 may be transmitted by one STA in the candidate UL-OFDMA transmission STA group. When the UL-OFDMA transmission of the STA is available, the AP may transmit the CTS frame 630 to the STA. The STA that receives the CTS frame 630 as the UL-OFDAM transmission STA may transmit an uplink frame 650 to the AP through the UL-OFDMA transmission.

The CTS frame 630 may explicitly include the transmission power determination information, but the transmission power determination information may be implicitly obtained based on transmission of the CTS frame 630 itself. For example, a channel through which the CTS frame 630 is transmitted may implicitly indicate the channel used by the UL-OFDMA transmission STA group. The STA may monitor the channel in order to verify whether the CTS frame 630 is transmitted. Alternatively, another response frame other than the CTS frame 630 may be used for implicitly indicating that the corresponding channel is the channel used by the UL-OFDMA transmission STA group.

According to the embodiment of the present invention, the transmission power determination information may be implicitly transmitted at the time of TXOP negotiation or transmitting a management frame.

For example, the AP may protect a transmission interval for OFDMA packet transmission of the UL-OFDMA transmission STA based on the TXOP negotiation. The AP may explicitly announce that the transmission channel of the response frame may be available and be used for the OFDMA packet transmission through the response frame (e.g., the CTS frame) transmitted to the STA at the time of the TXOP negotiation.

In detail, the UL-OFDMA STA may determine the uplink transmission power based on the transmission power determination information included in the CTS frame transmitted by the AP, but determine the uplink transmission power based on whether the CTS frame is detected on the monitored channel.

For example, referring to FIG. 6, after the STS frame 600 is transmitted by the STA1, the STA1 and the STA2 may detect transmission of the response frame such as the CTS frame 630 on all UL-OFDMA transmission channels.

The STA1 and the STA2 may find that the number of channels to be used by the UL-OFDMA transmission STA group is two and each of the STA1 and the STA2 may determine that the uplink transmission power as -79 dbm which is 1/2 of the default power (alternatively, full power) (e.g., -76 dbm). The sum of the uplink transmission powers of the signals of the STA1 and the STA2 may be -76 dbm and the AP may sense and receive an OFDMA packet within the CCA range. Further, each of the STA1 and the STA2 may determine the uplink transmission power for sensing the OFDMA packet of the AP by additionally considering the power consumption depending on the transmission/reception distance.

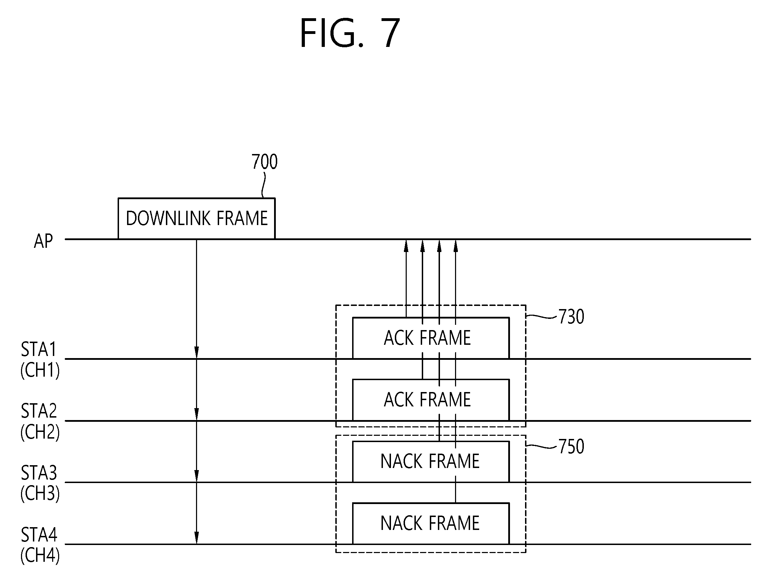

FIG. 7 is a conceptual view illustrating a method for transmitting an acknowledge (ACK) frame according to an embodiment of the present invention.

In FIG. 7, a case in which the AP transmits a downlink frame 700 to the plurality of STAs based on DL-OFDMA transmission may be assumed. The STA1 to the STA4 may receive different downlink frames 700, respectively. Among the plurality of STAs that receive the downlink frames 700, at least one STA that successfully receives the downlink frame 700 may transmit a response frame to the downlink frame 700 to the AP based on the UL-OFDMA transmission. In this case, the downlink frame 700 may be a downlink data frame and the response frame may be an ACK frame.

Accordingly, the imbalance problem of the uplink transmission power at the time of the UL-OFDMA transmission may similarly occur according to the number of at least one STA that successfully receives a plurality of downlink data frames transmitted based on the DL-OFDMA transmission.

According to the embodiment of the present invention, the plurality of STAs that receive the downlink frames 700 may be implemented not to transmit the response frame only when successfully receiving the downlink frames 700 but to transmit the response frame even when unsuccessfully receiving the downlink frames.

For example, in the case where the downlink frame 700 is the downlink data frame and the response frame is the ACK frame, when the STA successfully receives the downlink data frame, the STA may transmit an ACK frame 730 and even when the STA unsuccessfully receives the downlink data frame, the STA may transmit an NACK frame 750. The NACK frame 750 may be a frame newly defined to indicate unsuccessful reception of the downlink data frame.

When the uplink frame is transmitted in such a manner, the power imbalance problem depending on whether the plurality of STAs unsuccessfully receive the downlink frames may not be caused.

According to yet another embodiment of the present invention, the plurality of STAs that receive the downlink frames may forcibly transmit the response frames to the downlink frames. For example, the plurality of STAs that receive the downlink frames may attempt transmitting the ACK frame/the NACK frame in spite of determining that using the channel is not available I the negotiated TXOP.

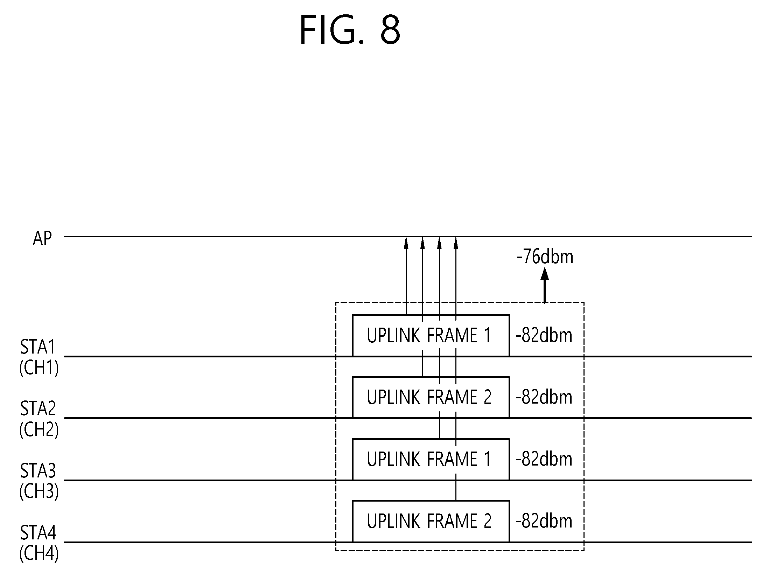

FIG. 8 is a conceptual view illustrating a method for transmitting an uplink frame by an STA having a low uplink transmission power capability according to an embodiment of the present invention.

In FIG. 8, STAs having the low uplink transmission power capability may perform the UL-OFDMA transmission requiring a power value of a higher CCA detection level by using information indicating whether the packet is transmitted for each channel.

Transmission coverage of the STA having the low uplink transmission power capability may be extended by such a method and the STA having the low uplink transmission power capability may also perform the UL-OFDMA transmission.

For example, the STA1 may be a terminal having an uplink power capability to perform the UL-OFDMA transmission with power which may be detected at a CCA level of - 82 dbm at the receiver on a bandwidth of 20 MHz. In detail, the STA1 may have an uplink transmission power capability of -82dbm+alpha and alpha may be a parameter depending on a power consumption margin depending on the distance.

When the CCA detection level is -76 dbm on a transmission bandwidth of 80 MHz and three other STAs having the same uplink transmission power capability as the STA1 are included in the same UL-OFDMA transmissions STA group to perform the UL-OFDMA transmission, -76 dbm which is the CCA detection level on the transmission bandwidth of 80 MHz may be satisfied.

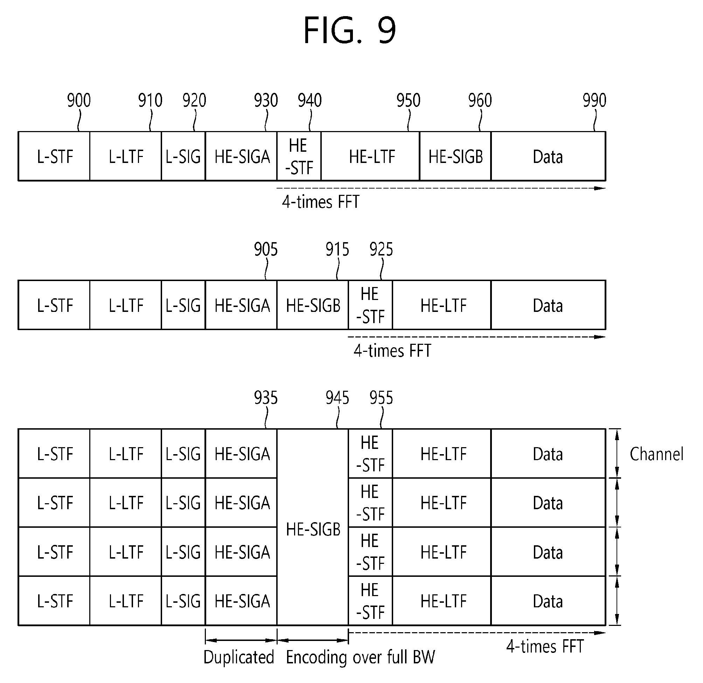

FIG. 9 is a conceptual view illustrating a PPDU format for transmitting a downlink frame through a downlink dedicated channel according to an embodiment of the present invention.

In FIG. 9, disclosed is a PPDU format supporting IEEE802.11 ax. A PHY header of the PPDU format may include the transmission power determination information. For example, the PHY header of the PPDU format may include at least one of the information on the number of UL-OFDMA transmission STAs, the information on the channel used by the UL-OFDMA transmission STA group, and the information on the uplink transmissions power value of the UL-OFDMA transmission STA.

Referring to an upper part of FIG. 9, a PHY header of a downlink PPDU may include a legacy-short training field (L-STF), a legacy-long training field (L-LTF), a legacy-signal (L-SIG), a high efficiency-signal A (HE-SIG A), a high efficiency-short training field (HE-STF), a high efficiency-long training field (HE-LTF), and a high efficiency-signal-B (HE-SIG B). The PHY header may be divided into a legacy part up to the L-SIG and a high-efficiency (HE) part after the L-SIG.

The L-STF 900 may include a short training orthogonal frequency division multiplexing (OFDM) symbol. The L-STF 900 may be used for frame detection, an automatic gain control (AGC), diversity detection, and coarse frequency/time synchronization.

The L-LTF 910 may include a long training orthogonal frequency division multiplexing (OFDM) symbol. The L-LTF 910 may be used for fine frequency/time synchronization and channel prediction.

The L-SIG 920 may be used for transmitting control information. The L-SIG 920 may include information on data rate, a data length, and the like.

According to the embodiment of the present invention, the HE-SIG A 930 may include the transmission power determination information. For example, the HE-SIG A 930 may include at least one of the information on the number of UL-OFDMA transmission STAs, the information on the channel used by the UL-OFDMA transmission STA group, and the information on the uplink transmissions power value of the UL-OFDMA transmission STA.

For example, the HE-SIG A 930 may include the index information for indicating the information on the number of UL-OFDMA transmission STAs or the information on the channel used by the UL-OFDMA transmission STA group and the bitmap information. Further, the HE-SIG A 930 may include information on a quantized uplink transmission power value.

That is, the STA may determine the uplink transmission power based on the HE-SIG A 930 included in the PPDU transmitted from the AP.

Further, the HE-SIG A 930 may include information on the candidate UL-OFDMA transmission STAs and/or channels allocated to the respective candidate UL-OFDMA transmission STAs. For example, the PPDU that transmits the candidate UL-OFDMA transmission STA grouping frame may transmit the HE-SIG-A 930 including the information on the candidate UL-OFDMA transmission STAs and/or the channels allocated to the respective candidate UL-OFDMA transmission STAs.

Further, the HE-SIG A 930 may include information on an STA identification field for the STA that will receive the PPDU transmitted through a downlink and/or a downlink reception channel of the STA that will receive the PPDU. For example, the AP may perform transmission on DL-OFDMA to the plurality of STAs and the HE-SIG A 930 of the PPDU transmitted based on the DL-OFDMA transmission may indicate the STA that will receive the PPDU based on the STA identification field. Further, the HE-SIG A 930 of the PPDU may indicate even information on the downlink reception channel of the STA that will receive the

PPDU.

In addition, the HE-SIG A 930 may include color bits information, bandwidth information, tail bit, CRC bit, modulation and coding scheme (MCS) information, symbol number information for the HE-SIG B 960, and cyclic prefix (CP) (alternatively, a guard interval (GI)) length information for BSS identification information.

The HE-STF 940 may be used for improving automatic gain control estimation in a multiple input multiple output (MIMO) environment or an OFDMA environment.

The HE-LTF 950 may be used for estimating the channel in the MIMO environment or the OFDMA environment.

The HE-SIG B 960 may include information on a length MCS of a physical layer service data unit (PSDU) for each STA and the tail bit. For example, the information on the MCS may be determined based on transmission power information of or transmission power of the STA. The information on the MCS may include an MCS value other than an MCS indicated based on the polling frame or trigger frame transmitted by the AP for UL-MU transmission. Further, the HE-SIG B 960 may include information on the STA that will receive the PPDU and OFDMA based resource allocation information (alternatively, MU-MIMO information). When the OFDMA based resource allocation information (alternatively, MU-MIMO related information) is included in the HE-SIG B 960, the corresponding information may not be included in the HE-SIG A 930.

The size of IFFT applied to the HE-STF 940 and a field after the HE-STF 940 and the size of the IFFT applied to a field before the HE-STF 940 may be different from each other. For example, the size of IFFT applied to the HE-STF 940 and the field after the HE-STF 940 may be four times larger than the size of the IFFT applied to the field before the HE-STF 940. The STA may receive the HE-SIG A 930 and be instructed to receive the downlink PPDU based on the HE-SIG A 930. In this case, the STA may perform decoding based on an FFT size changed from the HE-STF 940 and the field after the HE-STF 940. On the contrary, when the STA may not be instructed to receive the downlink PPDU based on the HE-SIG A 930, the STA may stop decoding and negotiate the network allocation vector (NAV). A cyclic prefix (CP) of the HE-STF 940 may have a larger size than a CP of another field and during the CP interval, the STA may decode the downlink PPDU by changing the FFT size.

The cyclic prefix (CP) of the HE-STF 940 may have a larger size than a CP of another field and during the CP interval, the STA may decode the downlink PPDU by changing the FFT size.

The order of the fields constituting the PPDU format disclosed in the upper part of FIG. 9 may be changed. For example, as disclosed in the middle part of FIG. 9, the HE-SIG B 915 of the HE part may be positioned immediately after the HE-SIG A 905. The STA may decode up to the HE-SIG A 905 and the HE-SIG B 915 and receive required control information and perform the NAV negotiation. Similarly, the size of IFFT applied to the HE-STF 925 and a field after the HE-STF 925 and the size of the IFFT applied to a field before the HE-STF 925 may be different from each other.

The STA may receive the HE-SIG A 905 and the HE-SIG B 915. When reception of the downlink PPDU is instructed by the STA identification field of the HE-SIG A 905, the STA may decode the downlink PPDU by changing the FFT size from the HE-STF 925. On the contrary, the STA may receive the HE-SIG A 905 and when the STA may not be instructed to receive the downlink PPDU based on the HE-SIG A 905, the STA may perform the network allocation vector (NVA) negotiation.

Referring to the lower part of FIG. 9, disclosed is a downlink PPDU format for downlink (DL) multi-user (MU) transmission. The downlink PPDU may be transmitted to the STA through different downlink transmission resources (a frequency resource or a spatial stream). That is, the downlink PPDU may be transmitted to the plurality of STAs through a lower downlink dedicated channel included in a downlink dedicated channel. The field before the HE-SIG B 945 on the downlink PPDU may be transmitted in a duplicated form in respective different downlink transmission resources. The HE-SIG B 945 may be transmitted in an encoded form on all transmission resources. The field after the HE-SIG B 945 may include individual information for the plurality of respective STAs that receive the downlink PPDU.

When the fields included in the downlink PPDUs are transmitted through the respective downlink transmission resources, respectively, CRCs for the fields may be included in the downlink PPDUs. When the fields included in the downlink PPDUs are transmitted through the respective downlink transmission resources, respectively, CRCs for the fields may not be included in the downlink PPDUs. Accordingly, overhead for the CRC may be reduced. That is, the downlink PPDU format for the DL MU transmission according to the embodiment of the present invention uses the HE-SIG B 945 of the encoded form on all transmission resources to reduce the CRC overhead of the downlink frame.

For example, a case in which the AP transmits the downlink PPDU based on downlink (DL) multi-user (MU) OFDMA transmission through the downlink dedicated channel may be assumed. When one lower downlink dedicated channel bandwidth is 20 MHz, the STA decodes the HE-SIG A 935 transmitted through one lower downlink dedicated channel to be allocated with the downlink transmission resource. For example, the HE-SIG A 935 may indicate the downlink dedicated channel allocated to the STA as 80 MHz and the STA may decode the field after the HE-SIG A transmitted through the downlink dedicated channel of 80 MHz.

Similarly even in the downlink PPDU format for the DL MU transmission, the HE-STF 955 and the field after the HE-STF 955 may be encoded based on an IFFT size different from the field before the HE-STF 955. Accordingly, when the STA may receive the HE-SIG A 935 and the HE-SIG B 945 and is instructed to receive the downlink PPDU based on the HE-SIG A 935, the STA may decode the downlink PPDU by changing the FFT size from the HE-STF 955.

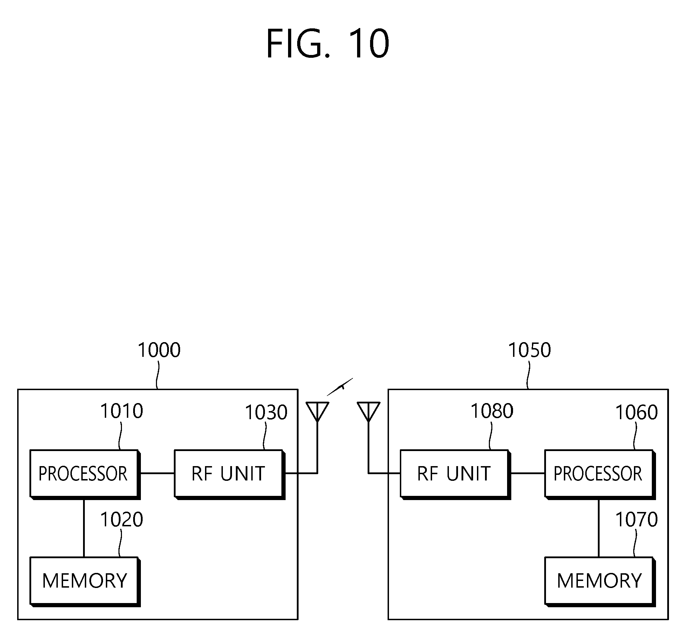

FIG. 10 is a block diagram illustrating a wireless apparatus in which an embodiment of the present invention can be applied.

Referring to FIG. 10, the wireless apparatus 1000 as an STA that may implement the aforementioned embodiment may be an AP 1000 or a non-AP station (alternatively, an STA) 1050.

The AP 1000 includes a processor 1010, a memory 1020, and a radio frequency (RF) unit 1030.

The RF unit 1030 is connected with the processor 1010 to transmit and/or receive a radio signal.

The processor 1010 may implement a function, a process, and/or a method which are proposed in the present invention. For example, the processor 1010 may be implemented to perform an operation of the wireless apparatus according to the embodiment of the present invention. The processor may perform the operation of the wireless apparatus disclosed in the embodiments of FIGS. 2 to 9.

For example, the processor 1010 may be implemented to transmit transmission power determination information to the STA. In detail, the processor 1010 may be implemented to generate the transmission power determination information and transmit the transmission power determination information to at least one STA included in the UL-OFDMA transmission group.

The STA 1050 includes a processor 1060, a memory 1070, and a radio frequency (RF) unit 1080.

The RF unit 1080 is connected with the processor 1060 to transmit and/or receive the radio signal.

The processor 1060 may implement a function, a process, and/or a method which are proposed in the present invention. For example, the processor 1020 may be implemented to perform an operation of the wireless apparatus according to the embodiment of the present invention. The processor may perform the operation of the wireless apparatus disclosed in the embodiments of FIGS. 2 to 9.

For example, the processor 1060 may receive the transmission power determination information from the access point (AP) and determine the uplink transmission power based on the transmission power determination information. Further, the processor 1060 may be implemented to transmit the uplink frame with the uplink transmission power on overlapped time resources through the respective allocated channels based on the OFDMA. A UL-OFDMA transmission group may be a group including at least one STA that transmits the uplink frame to the AP through the different frequency resources on the overlapped time resources based on the OFDMA.

The processors 1010 and 1060 may include an application-specific integrated circuit (ASIC), other chipset, a logic circuit, a data processing device, and/or a converter that converts a baseband signal and the radio signal to each other. The memories 1020 and 1070 may include a read-only memory (ROM), a random access memory (RAM), a flash memory, a memory card, a storage medium, and/or other storage devices. The RF units 1030 and 1080 may include one or more antennas that transmit and/or receive the radio signal.

When the embodiment is implemented by software, the aforementioned technique may be implemented by the module (a process, a function, and the like) performing the aforementioned function. The module may be stored in the memories 1020 and 1070 and executed by the processors 1010 and 1060. The memories 1020 and 1070 may be positioned inside or outside the processors 1010 and 1060 and connected with the processors 1010 and 1060 through various well-known means.

## Claims

1. A method for transmitting an uplink frame in wireless LAN, the method comprising:
receiving, by at least one station (STA) included in an uplink (UL)-orthogonal frequency division multiplexing (OFDMA) transmission STA group, transmission power determination information from an access point (AP);
determining, by the at least one STA, uplink transmission power on the basis of the transmission power determination information; and
transmitting, by the at least one STA, an uplink frame by the uplink transmission power in an overlapped time resource through each channel allocated on the basis of OFDMA,
wherein the UL-OFDMA transmission group is a group including the at least one STA that transmits the uplink frame to the AP through different frequency resources on the overlapped time resource on the basis of the OFDMA.

2. The method of claim 1, wherein the transmission power determination information includes information on a channel to be used by the UL-OFDMA transmission group.

3. The method of claim 1, wherein the uplink transmission power is determined by considering minimum power for network allocation vector (NAV) negotiation of an adjacent STA that performs a channel access on a channel overlapped with the at least one STA.

4. The method of claim 1, wherein:
the transmission power determination information includes the information on the channel to be used by the UL-OFDMA transmission group, and
the information on the channel to be used by the UL-OFDMA transmission group is bitmap information or index information for indicating a UL-OFDMA transmission channel to be used by the UL-OFDMA transmission group among all UL-OFDMA transmission channels.

5. The method of claim 1, wherein the transmission power determination information includes information on the number of the at least one STA included in the UL-OFDMA transmission group.

6. At least one station (STA) included in an uplink (UL)-orthogonal frequency division multiplexing (OFDMA) transmission STA group transmitting an uplink frame in wireless LAN, the at lest one STA comprising:
a radio frequency (RF) unit implemented to transmit or receive a radio signal; and
a process operatively connected with the RF unit,
wherein the processor is implemented to receive transmission power determination information from an access point (AP),
determine uplink transmission power based on the transmission power determination information, and
transmit an uplink frame by the uplink transmission power in an overlapped time resource through each channel allocated on the basis of OFDMA, and
the UL-OFDMA transmission group is a group including the at least one STA that transmits the uplink frame to the AP through different frequency resources on the overlapped time resource on the basis of the OFDMA.

7. The STA of claim 6, wherein the transmission power determination information includes information on a channel to be used by the UL-OFDMA transmission group.

8. The STA of claim 6, wherein the uplink transmission power is determined by considering minimum power for network allocation vector (NAV) negotiation of an adjacent STA that performs a channel access on a channel overlapped with the at least one STA.

9. The STA of claim 6, wherein:
the transmission power determination information includes the information on the channel to be used by the UL-OFDMA transmission group, and
the information on the channel to be used by the UL-OFDMA transmission group is bitmap information or index information for indicating a UL-OFDMA transmission channel to be used by the UL-OFDMA transmission group among all UL-OFDMA transmission channels.

10. The STA of claim 6, wherein the transmission power determination information includes information on the number of the at least one STA included in the UL-OFDMA transmission group.
